# EUROPEAN PATENT SPECIFICATION

(11) **EP 3 180 754 B1**
(45) Date of publication and mention of the grant of the patent: **18.04.2018**
(21) Application number: 15794608.8
(22) Date of filing: 07.10.2015
(51) Int. Cl.: G06Q 30/02, G06Q 50/00, H04W 4/14

(54) **METHOD, APPARATUS AND COMPUTER PROGRAM PRODUCT FOR ADVERTISING OVER A NETWORK**
VERFAHREN, VORRICHTUNG UND COMPUTERPROGRAMMPRODUKT FÜR WERBUNGEN ÜBER EIN NETZWERK
PROCÉDÉ, APPAREIL ET PRODUIT PROGRAMME D'ORDINATEUR POUR FAIRE DE LA PUBLICITÉ SUR UN RÉSEAU

(30) Priority: 19.10.2014 GB 201418531; 27.05.2015 GB 201509034; 24.09.2015 GB 201516916
(43) Date of publication of application: 21.06.2017
(73) Proprietor: Cloudbanter Ltd., London W1U 6AG (GB)
(72) Inventor: BABCOCK, Clay, St. Louis Park, Minnesota 55416 (US); WILLIAMS, Graham, London W5 3PP (GB)
(74) Representative: Dunlop, Hugh Christopher
(86) International application number: PCT/GB2015/052936
(87) International publication number: WO 2016/063005

(56) References cited:
- EP-A2- 2 523 410
- WO-A1-2008/130565
- WO-A1-2012/131430
- US-A1- 2009 186 635
- US-A1- 2009 203 359

## Description

### Field of the invention

This invention relates to a method, an apparatus and a computer program product for sending information over a network.

### Background

US 2013/0226701 A1 describes a system comprising a network entity, a first user equipment and a second user equipment. In operation, the first user equipment may send a message to the second user equipment via Short Message Service, SMS. The network entity acts as a relay. It receives the message from the first user equipment, determines an advertisement, and sends both the message and the advertisement to the second user equipment via SMS.

In a first embodiment, the network entity determines that the sum of characters contained in the message and the advertisement is less than or equal to one hundred and sixty characters, and sends the message and the advertisement in a single SMS message. In a second embodiment, the network entity determines that the sum of characters contained in the message and the advertisement is more than one hundred and sixty characters, and sends the message and the advertisement in two separate SMS messages.

The first embodiment is disadvantageous in that the size of the advertisement is limited by the size of the SMS message. Therefore, the network entity cannot always send detailed advertisements to the second user equipment. The second embodiment is disadvantageous in that it requires an increased amount of network resources to send advertisements to the second user equipment.

The invention aims at addressing the above shortcomings.

WO2008/130565A1 describes a method and a system for inserting advertisement content into a text message.

### Summary

The invention is directed to a plurality of methods, apparatus and non-transitory computer readable medium as set forth in the claims.

The disclosure relates to a method for advertising over a network performed by a network entity comprising: receiving a message from a first user equipment; generating an enriched message comprising the message and an index, wherein the index corresponds to content of an advertisement in an indexed table accessible by a second user equipment; and sending the enriched message to the second user equipment. The enriched message comprises an index corresponding to the content of an advertisement rather than the content of the advertisement. By so doing, the size of the enriched message can be minimized and thus the enriched message can be sent to the second user equipment using a reduced amount of network resource (i.e. bandwidth).

According to one feature, the method further comprises sending at least one advertisement to the second user equipment. By so doing, the second user equipment can build or update the indexed table accessible by the second user equipment.

According to another feature, the sending of at least one advertisement to the second user equipment occurs during off peak hours. By so doing, network resources can be used more efficiently over time.

According to one feature, the at least one advertisement is sent to the second user equipment via Short Message Service, SMS. SMS is a standard protocol for sending messages of up to one hundred and sixty alphanumeric characters. By so doing, the sending of the at least one advertisement to the second user equipment is simplified.

According to another feature, the at least one advertisement comprises (i) an Advert Deliver Message, ADM, including an index and content and (ii) a User Data Header, UDH, including an indicator indicating that the ADM is to be parsed and stored in the indexed table. By so doing, a message received via SMS can be identified by the mobile device as an advertisement simply by parsing the UDH. There is no need to display the message and to request a user intervention. Thus, the experience of the user of the mobile device is not degraded.

According to one feature, the ADM further comprises at least one of a global advertisement key, a style code a short code for action and space for future use.

According to another feature, the index consists of one character. By so doing, the size of the message included in the enriched message can be maximized.

According to one feature, the message is received from the first user equipment via Short Message Service, SMS, and wherein the enriched message is sent to the second user equipment via SMS.

According to another feature, the enriched message is generated only where the sum of the size of the index and the size of the message received from the first user equipment is less than or equal to a maximum size. Typically, the maximum size is one hundred and sixty characters. By so doing, the enriched message can be sent in a single message via SMS.

According to one feature, the method further comprises receiving a feedback message from the second user equipment when the second user equipment interacts with the content of the advertisement. By so doing, an operator of a network entity can detect if the second user equipment has interacted with the content of at least one advertisement. Thus, the operator of the network entity can implement a "pay-per-click" policy with an advertiser.

The disclosure further relates to a method for advertising over a network performed by a user equipment comprising: receiving an enriched message comprising a message and an index from a network entity, wherein the index corresponds to content of an advertisement in an indexed table accessible by the user equipment; accessing the content advertisement from the indexed table using the index; and displaying the message and the content of the advertisement.

According to one feature, the method further comprises: receiving at least one advertisement from the network entity; and building or updating the indexed table using the at least one advertisement.

According to another feature, the at least one advertisement is received during off peak hours.

According to one feature, the indexed table is stored in the user equipment. By so doing, the user equipment can have quick access to the indexed table.

According to another feature, the method further comprises: receiving a subsequent message from the network entity; accessing the content of an advertisement in the indexed table using an index included in a previously received enriched message from the network entity.

According to one feature, the method further comprises sending a feedback message from the user equipment to the network entity, when the user equipment interacts with the content of the advertisement.

The disclosure further relates to a network entity for advertising over a network comprising: means for receiving a message from a first user equipment; means for generating an enriched message comprising the message and an index, wherein the index corresponds to content of an advertisement in an indexed table accessible by a second user equipment; and means for sending the enriched message to the second user equipment.

According to one feature, the network entity further comprises means for sending at least one advertisement to the second user equipment.

According to another feature, the sending of at least one advertisement to the second user equipment occurs during off peak hours.

According to one feature, the at least one advertisement is sent to the second user equipment via Short Message Service, SMS.

According to another feature, the at least one advertisement comprises (i) an Advert Deliver Message, ADM, including an index and content and (ii) a User Data Header, UDH, including an indicator indicating that the ADM is to be parsed and stored in the indexed table.

According to one feature, the ADM further comprises at least one of a Global Advertisement key, a style code, and a short code for action and future use.

According to another feature, each index consists of one character.

According to one feature, the message is received from the first user equipment via Short Message Service, SMS, and wherein the enriched message is sent to the second user equipment via SMS.

According to another feature, the enriched message is generated only where the sum of the size of the index and the size of the message received from the first user equipment is less than or equal to a maximum size.

According to one feature, the network entity further comprises means for receiving a feedback message from the second user equipment where the second user equipment interacts with the content of the at least one advertisement.

The disclosure further relates to a user equipment for advertising over a network comprising: means for receiving an enriched message comprising a message and an index from a network entity, wherein the index corresponds to content of an advertisement in an indexed table accessible by the user equipment; means for accessing the content of the advertisement from the indexed table using the index; and means for displaying the message and the content of the advertisement.

According to one feature, the user equipment further comprises: means for receiving at least one advertisement from the network entity; and means for building or updating the indexed table using the at least one advertisement.

According to another feature, the at least one advertisement is received during off peak hours.

According to one feature, the indexed table is stored in the user equipment.

According to another feature, the user further comprises: means for receiving a subsequent message from the network entity; means for accessing the content of an advertisement from the indexed table using an index included in a previously received enriched message from the network entity.

According to one feature, the user equipment further comprises means for sending a feedback from the user equipment to the network entity, where the user equipment interacts with the content of the advertisement.

The disclosure further relates to a non-transitory computer readable medium for equipping a network entity comprising code, which when executed by a processor, causes the processor to perform any one of the above methods.

The disclosure further relates to a non-transitory computer readable medium for equipping a user equipment comprising code, which when executed by a processor, causes the processor to perform any one of the above methods.

The disclosure further relates to a method for sending information over a network, comprising: selecting a message having a maximum size and having a first section filled with primary information; determining the size of a secondary section being the difference between the maximum size and the size of the first section; determining a portion of secondary information having a size smaller or equal to the size of the secondary section; at least partially filling the secondary section with the portion of secondary information; sending the filled message. By so doing, detailed information (which comprises a plurality of portions of information) can be sent within existing messages without increasing the traffic.

According to one feature, the method further comprises dividing the secondary information into a plurality of portions of secondary information for insertion into the secondary section of a message.

According to another feature, each portion of the plurality of portions of secondary information has a predetermined size, and portions of the secondary information are inserted into only messages for which the size of the secondary information exceeds the predetermined size. By so doing, the dividing of the information is simplified.

According to one feature, each portion of the plurality of portions of secondary information has a variable size and wherein the filled message comprises header information indicating which section is filled with primary information and which section is at least partially filled with secondary information. By so doing, the second section can be optimally filled, reducing the amount of network resources.

According to another feature, the filled message is sent via Short Message Service, SMS.

According to one feature, the method is performed by a network entity, the message is received from a first user equipment and the filled message is sent to a second user equipment.

According to another feature, the method further comprises determining by the network entity whether an amount of messages received from the first user equipment by, unit of time, is greater than a threshold. By so doing, the network entity is adapted to make a decision as to whether there is enough message traffic and therefore as to whether the information should be sent via filled messages or should be sent via another mechanism.

According to one feature, the message is received via Short Message Service, SMS.

According to another feature, the method further comprises determining by the network entity whether an amount of messages received from the first user equipment, by unit of time, is greater than a threshold.

According to another feature, wherein the message is received via Short Message Service, SMS.

According to one feature, the secondary information comprises (i) an Advert Delivery Message, ADM, including an index and content and (ii) a User Data Header, UDH, including an indicator indicating that the ADM is to be parsed and stored in an indexed table in the second user equipment, wherein the ADM further comprises at least one of a Global Advertisement Key, a style code, a short code for action and future use.

According to one feature, the method is performed by a first user equipment and wherein the filled message is sent to a first network entity, such that the first network entity can rebuild the secondary information based on the portions of secondary information and send the secondary information to a second network entity.

According to another feature, the second network entity is a web server. By so doing, information (which comprises a plurality of portions of information) can be sent to a web server without using conventional internet data.

According to one feature, the method further comprises determining by the first user equipment whether an amount of messages sent from the first user equipment to the network entity, by unit of time, is greater than a threshold. By so doing, the first user equipment is adapted to make a decision as to whether there is enough message traffic and therefore as to whether the information can be sent via filled messages or should be sent using conventional internet data.

The disclosure further relates to an apparatus for sending information over a network, comprising: means for selecting a message having a maximum size and having a first section filled with primary information; means for determining the size of a secondary section being the difference between the maximum size and the size of the first section; means for determining a portion of secondary information having a size smaller or equal to the size of the secondary section; means for at least partially filling the secondary section with the portion of secondary information and means for sending the filled message.

According to one feature, the apparatus further comprises means for dividing the secondary information into a plurality of portions of secondary information for insertion into the secondary section of a message.

According to another feature, each portion of the plurality of portions of secondary information has a predetermined size, and portions of secondary information are inserted into only messages for which the size of the secondary message exceeds the predetermined size.

According to one feature, each portion of the plurality of portions of secondary information has a variable size and wherein the filled message comprises header information indicating which section is filled with primary information and which portion is at least partially filled with secondary information.

According to another feature, the filled message is sent via Short Message Service, SMS.

According to one feature, the apparatus is a network entity, wherein the message is received from a first user equipment and wherein the filled message is sent to a second user equipment.

According to another feature, the apparatus further comprises means for determining whether an amount of messages received from the first user equipment by, unit of time, is greater than a threshold.

According to one feature, the message is received via Short Message Service, SMS.

According to one feature, the secondary information comprises (i) an Advert Deliver Message, ADM, including an index and content and (ii) a User Data Header, UDH, including an indicator indicating that the ADM is to be parsed and stored in an indexed table in the second user equipment, the ADM further comprises at least one of a Global Advertisement Key, a style code, a short code for action and future use.

According to one feature, the apparatus is a first user equipment (114) and wherein the filled message is sent to a first network entity (110), such that the first network entity can rebuild the secondary information based on the portions of secondary information and send the secondary information to a second network entity.

According to another feature, the second network entity is a web server.

According to one feature, the apparatus further comprises means for determining whether an amount of messages sent from the first user equipment to the network entity by unit of time is greater than a threshold.

The disclosure further relates to a method for receiving information over a network, comprising: receiving a message, comprising a first section filled with primary information and a second section at least partially filled with a portion of secondary information; separating the message into the primary information and the portion of secondary information; delivering the primary information for use; and storing the portion of secondary information for later rebuilding the secondary information.

According to one feature, the method further comprises receiving a plurality of messages, comprising a first section filled with primary information and a second section at least partially filled with a portion of secondary information; separating each message of the plurality of messages into primary information and the portion secondary information; delivering the primary information for use; and rebuilding the secondary information based on the portions of secondary information. In one embodiment, an SMS application is running. Where the SMS application is used, a display comprises a primary information window and a secondary information window. The delivering comprises displaying the primary information in the primary information window to be read by a user. In addition, the rebuilt secondary information can be displayed in a secondary information window. In a second embodiment, an SMS application and a social network application can both be running. Where the SMS application is used, a display comprises a primary information window. The delivering comprises displaying the primary information in the primary information window to be read by a user. In addition, where the social network application is used, the display comprises a secondary information window in which the rebuilt secondary information can be displayed.

According to another feature, each portion of secondary information has a predetermined size and portions of the secondary information are inserted into only messages for which the size of the secondary information exceeds the predetermined size.

According to one feature, each portion of secondary information has a variable size and wherein the message comprises header information indicating which section is filled with primary information and which section is at least partially filled with secondary information.

According to another feature, the filled message is received via Short Message Service, SMS.

According to one feature, the method is performed by a user equipment, wherein the message is received from a network entity.

According to another feature, the method further comprises displaying the primary information of the message.

According to another feature, the secondary information comprises; (i) an Advert Delivery Message, ADM, including an index and content and (ii) a User Data Header, UDH, including an indicator indicating that the ADM is to be parsed and stored in an indexed table in the second user equipment, wherein the ADM further comprises at least one of a Global Advertisement Key, a style code, a short code for action and future use.

According to another feature, the method is performed by a network entity, wherein the message is received from a first user equipment.

According to one feature, the method further comprises sending the secondary information to a second network entity.

According to another feature, the second network entity is a web server.

The disclosure further relates to an apparatus for receiving information over a network, comprising: means for receiving a message, comprising a first section filled with primary information and a second section at least partially filled with a portion of secondary information; means for separating the message into the primary information and the portions of secondary information; means for delivering the primary information for use; and means for storing the portion of secondary information for later rebuilding the secondary information.

According to one feature, the apparatus further comprises means for receiving a plurality of messages, comprising a first portion occupied by primary information and a second portion occupied by secondary information; means for separating each message of the plu rality of messages into the primary information and the portions of secondary information; and means for rebuilding secondary information based on the portions of secondary information.

According to another feature, each portion of secondary information has a predetermined size and portions of the secondary information are inserted into only messages for which the size of the secondary information exceeds the predetermined size.

According to one feature, each portion of secondary information has a variable size and wherein the message comprises header information indicating which section is filled with primary information and which section is at least partially filled with secondary information.

According to another feature, the filled message is received via Short Message Service, SMS.

According to one feature, the method is performed by a user equipment, wherein the message is received from a network entity.

According to another feature, the apparatus further comprises means for displaying the primary information of the message.

According to another feature, the secondary information comprises; (i) an Advert Delivery Message, ADM, including an index and content and (ii) a User Data Header, UDH, including an indicator indicating that the ADM is to be parsed and stored in an indexed table in the second user equipment, wherein the ADM further comprises at least one of a Global Advertisement Key, a style code, a short code for action and future use.

According to another feature, the method is performed by a network entity, wherein the message is received from a first user equipment.

According to one feature, the apparatus further comprises means for sending the secondary information to a second network entity.

According to another feature, the second network entity is a web server.

The disclosure finally relates to a non-transitory computer readable medium for equipping an apparatus comprising code, which when executed by a processor, causes the processor to perform any of the above methods.

Other features and advantages will become apparent after review of the entire application, including the following sections: brief description of the drawings, detailed description and claims.

### Brief description of the drawings

The accompanying drawings illustrate exemplary aspects of the invention, and, together with the general description given above and the detailed description given below, serve to explain features of the invention.
Fig. 1 illustrates a system for advertising over a network.
Fig. 2 illustrates an indexed table stored in a UE equipped with an improved SMS client in the system of Fig. 1.
Fig. 3 illustrates a flow chart of a method for building/ updating/storing the indexed table of Fig. 2.
Fig. 4 illustrates a flow chart of a method for sending an SMS message, from a first UE equipped with an improved SMS client to second UE equipped with an improved SMS client, in the system of Fig. 1.
Fig. 5 illustrates a flow chart of a first method for sending a SMS message, from a first UE not equipped with an improved SMS client to second UE equipped with an improved SMS client, in the system of Fig. 1.
Fig. 6 illustrates a flow chart of a second method for sending a SMS message, from a first UE not equipped with an improved SMS client to second UE equipped with an improved SMS client, in the system of Fig. 1.
Fig. 7 illustrates a UE equipped with an improved SMS client displaying a SMS message and content of an ADM.
Fig. 8 illustrates a flow chart of a method for sending a SMS advertisement, from a network entity to a UE that is equipped with an improved SMS client, in the system of Fig.1.
Fig. 9 illustrates a flow chart of a method for sending a social media post from a UE that is equipped with an improved SMS client to a web server, in the system of Fig.1.

### Detailed Description

The various aspects will be described in detail with reference to the accompanying drawings. Wherever possible, the same reference numbers will be used throughout the drawings to refer to the same or like parts. References made to particular examples and implementations are for illustrative purposes, and are not intended to limit the scope of the invention or the claims.

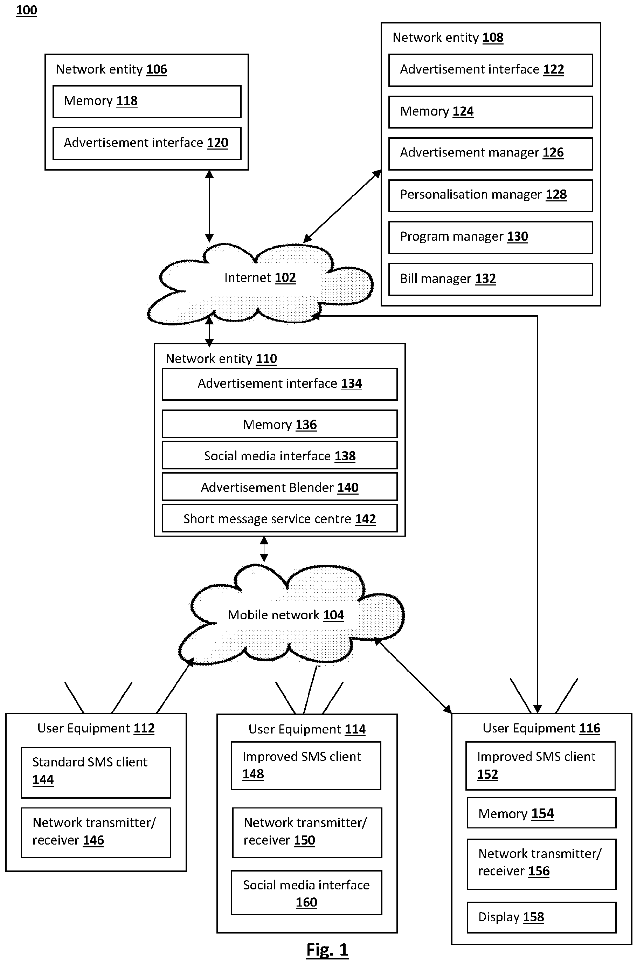

Fig. 1 shows a system 100 including an internet network 102 and a mobile network 104. The system 100 comprises network entities 106, 108, 110 and user equipments (UEs) 112, 114 and 116. It should be understood that although network entities 106, 108 and 110 are illustrated as separate elements, they may be regrouped into a single element. In addition, it should be understood that although UEs 112, 114 and 116 are illustrated as being equipped with separate components (for the clarity and conciseness), they may be all equipped with the same components.

Network entity 106 is typically housed at an advertising agency. Network entity 106 comprises a memory 118 and an advertisement interface 120. The memory is configured to store a set of Advertisement Delivery Messages (ADMs). The advertisement interface 120 is configured to send the set of ADMs to the network entity 108. Each ADM consists of a plurality of characters arranged to meet a format requirement. Each ADM comprises at least content and an index. The index can be used to build or update an indexed table in UE 116 and to locate the ADM within the indexed table. Each ADM may further comprise a global advertisement key that uniquely identifies the ADM in the system 100, a style code that identifies style features (e.g. font, size of characters) to be applied to the content, a short code for action (i.e. a link to a webpage) and/or space for future use.

In one embodiment, the ADM is written in a language (e.g. English, Spanish, French, etc.) requiring a single-byte character set (e.g. ASCII, ISO-8859 in any of its parts, or UTF-8). In this embodiment, the index typically consists of one character, the content typically consists of one hundred and twenty characters, the global advertisement key typically consists of five characters, the style code typically consists of four characters, and the short code for action typically consists of eight characters. In another embodiment, the ADM is written in a language requiring a double-byte character set (e.g. Chinese, Japanese, Hindi, etc.). In this embodiment, the index typically consists of one character, the content typically consists of sixty characters, the global advertisement key typically consists of three characters, the style code typically consists of one character, the short code for action typically consists of eight characters.

Network entity 108 is typically housed at the Applicant. It comprises an advertisement interface 122, a memory 124, an advertisement manager 126, a personalisation manager 128, a program manager 130 and a bill manager 132. It should be understood that although bill manager and program manager are illustrated as separate elements, they may be regrouped into a single element.

Advertisement interface 122 is configured to receive the set of ADMs from network entity 106 and to store them in memory 124. Advertisement interface 122 is further configured to send a subset of ADMs to network entity 110. Advertisement manager 126 is configured to check the set of ADMs to ensure that each ADM meets the format requirement described above.

Personalisation manager 128 is configured to select a subset of ADMs from the set of ADMs to be sent to UE 116. For example, the subset of ADMs may be selected based on profile information provided by UE 116 (or by the user of UE 116), such as age or gender. The subset of ADMs may be selected based on personal interest information provided by UE 116. For example, UE 116 indicates an interest towards advertisement for motorcycles.

Program manager 130 is configured to control how many times each content of an ADM of the subset of ADMs is to be displayed by UE 116. Bill Manager 132 is configured to control how many times each content of an ADM of the subset of ADMs is interacted with by UE 116. By so doing, the program manager 130 and the bill manager 132 can implement an advertising campaign set out by the network entity 106.

Network entity 110 is typically housed at a mobile operator (but most of the software executed thereon is owned by the Applicant). It comprises an advertisement interface 134, a memory 136, a social media interface 138, an advertisement blender 140 and a short message service centre (SMSC) 142. Advertisement interface 134 receives the subset of ADMs from network entity 108 and stores them in memory 136. Social media interface 138 allows interaction with social media organisations such as Facebook and Twitter.

Advertisement blender 140 is configured to generate a subset of SMS advertisements by adding a User Data Header (UDH) to each ADM of the subset of ADMs. Each SMS advertisement contains one hundred and sixty characters. The UDH enables UE 116 to identify a SMS advertisement. Advertisement blender 140 is further configured to generate enriched messages by adding an index of an ADM of the subset of ADMS to SMS messages. SMSC 142 is configured to send the SMS advertisements to a user equipment. The SMSC 142 may advantageously send the SMS advertisement during off peak hours configured by the operator (e.g. Between 02:00 and 04:00 hours local time).

SMSC 142 is configured to send the subset of SMS advertisement to UE 116. In one embodiment, the SMS advertisement is sent in a single SMS message. In a second embodiment, the SMS advertisement is sent in a plurality of filled SMS. SMSC 142 is further configured to send enriched SMS messages generated by the advertisement blender 140 to UE 116.

UE 112 comprises a standard SMS client 144 and a network transmitter/receiver 146. The standard SMS client 144 is configured to generate a SMS message of up to one hundred and sixty characters. The network transmitter/receiver 146 is configured to send a SMS message to network entity 110. UE 114 comprises an improved SMS client 148, a network transmitter/receiver 150 and a social media interface 160.

The improved SMS client 148 is configured to generate a SMS message of up to one hundred and fifty nine characters. The network transmitter/receiver 150 is configured to send a SMS message to network entity 110.

The improved SMS client can take the form of a program that can be downloaded by some UE equipped with a standard SMS client predetermined by the Applicant. The improved SMS client is then determined as a default SMS client by the operating system of the UE.

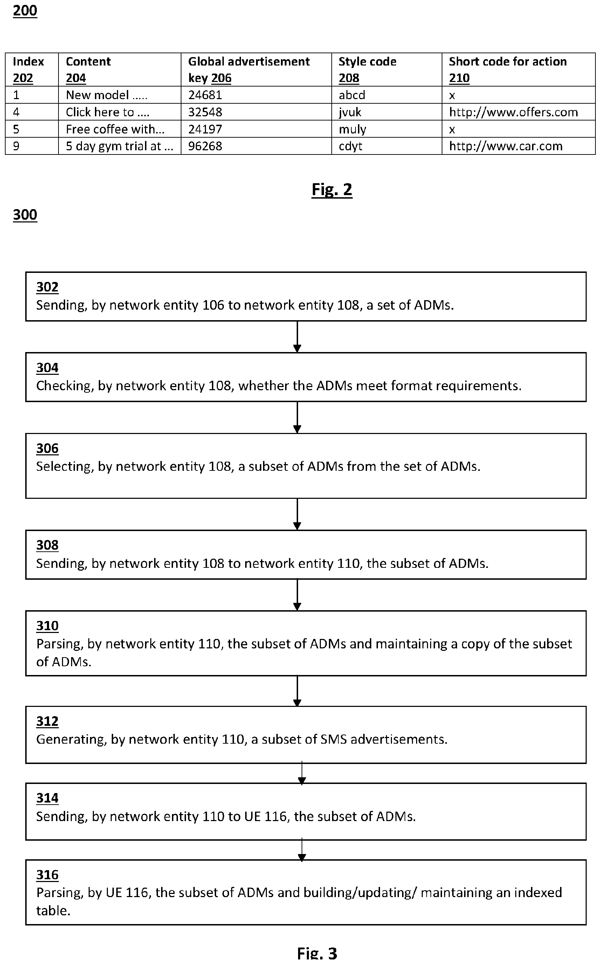

UE 116 comprises an improved SMS client 152, a memory 154, a network transmitter/receiver 156 and a display 158. The improved SMS client 152 is configured to receive SMS advertisements from network entity 110, to retrieve ADMs from the SMS advertisements and to build/ update/store an indexed table in memory 154 based on the ADMS. An example of an indexed table is illustrated on figure 2. The improved SMS client 152 is further configured to receive an enriched SMS message from network entity 110 via the a network transmitter/receiver 156, to retrieve the SMS message from the enriched SMS message, to retrieve an index from the enriched SMS message, to locate an ADM stored in the indexed table and to retrieve the ADM (at least the style code and the content).

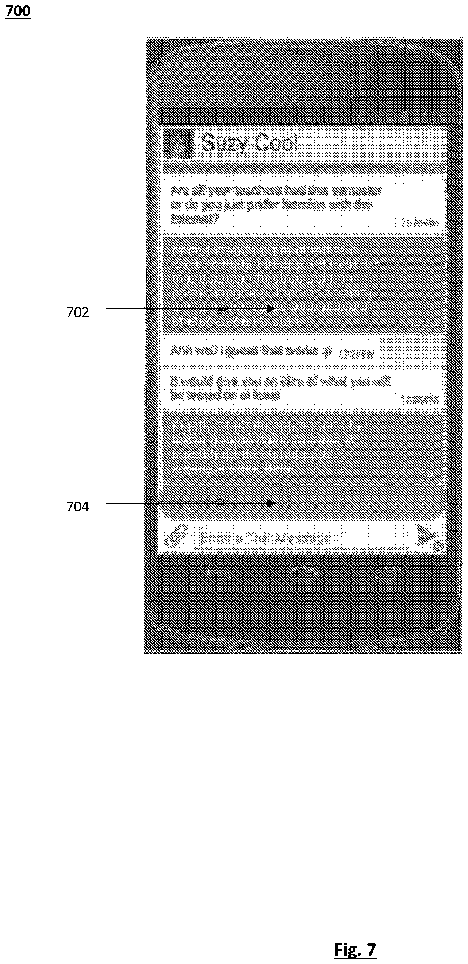

The display 158 is configured to display the SMS message and the content of the ADM (see Fig. 7). The content of the ADM is displayed in accordance to the style code of the ADM. Finally, the improved SMS client 152 is configured to detect an interaction with the content of the advertisement (e.g. saving of the content in memory or clicking on the action code) and to send a feedback message to the network entity 108. In one embodiment, the feedback is sent to network entity 108 via the internet network 102 (e.g. email). In another embodiment, the feedback is sent to network entity 108 via the mobile network 104 and the internet network 102 (e.g. SMS message).

Fig. 2 shows an example of an indexed table 200 built/updated/maintained in UE with an improved SMS client. The indexed table 200 references four ADMs. For each ADM, the indexed table 200 includes an index 202, content 204, an optional global advertisement key 206, an optional style code 208 and an optional short code for action 210.

Fig. 3 shows a method 300 for building/updating/ maintaining the indexed table 200 in UE 116. At step 302, the advertisement interface 120 of the network entity 106 sends the set of ADMs stored in memory 118 to the advertisement interface 122 of the network entity 108. At step 304, network entity 108 receives the set of ADMs from network entity 106. The advertisement manager 126 checks whether each ADM of the set of ADMs meets the format requirement and stores the set of ADMs in memory 124. At step 306, personalisation manager 128 selects a subset of ADMs from the set of ADMs based on, for example, the profile information provided by/for the UE 116, such as age or gender and/or the personal interest information provided by/for UE 116. At step 308, the advertisement interface 122 of network entity 108 sends the subset of ADMs to the advertisement interface 134 of network entity 110.

At step 310, the advertisement interface 134 of network entity 110 receives and parses the subset of ADMs. The advertisement interface 134 maintains a copy of the subset of ADMs in memory 136. At step 312, the advertisement blender 140 generates a subset of SMS advertisements by adding the UDH to each ADM of the subset of ADMs. At step 314, the SMSC 142 sends the subset of SMS advertisements to the network transmitter/receiver 156 of UE 116 (as described above). At step 316, the improved SMS client 152 parses incoming SMS messages for the UDH header and, if found, identifies the incoming SMS messages as the subset of SMS advertisements. The improved SMS client 152 then retrieves the subset of ADMs from within the subset of SMS advertisements and builds/updates/maintains the indexed table of ADMs.

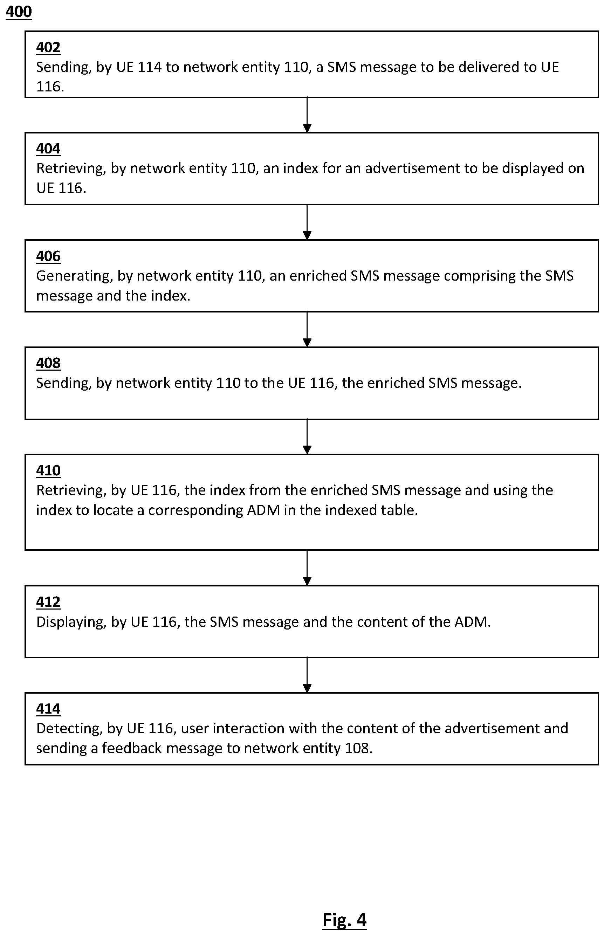

Fig. 4 shows a method 400 for displaying a SMS message, sent by UE 114, and the content of an ADM at UE 116. At step 402, the improved SMS client 148 of UE 114 generates the SMS message and the network transmitter/receiver 150 sends the SMS message to the network SMSC 142 of network entity 110. As a result of generating the SMS message using the improved SMS client 148, the SMS message contains a maximum of one hundred and fifty nine characters. At step 404, the SMSC 142 of network entity 110 receives the SMS message from UE 114. The advertisement blender 140 retrieves an index of an ADM from the subset of ADMs stored in memory 136. At step 406, the advertisement blender 140 generates an enriched SMS message comprising the SMS message and the index. At step 408, the SMSC 142 sends the enriched SMS message to the improved SMS client 152 of UE 116 via the network transmitter/receiver 156.

At step 410, UE 116 receives the enriched SMS message. The improved SMS client 152 retrieves the index from the enriched SMS message. The index is used to locate an ADM stored in the indexed table 200 and to retrieve at least the style code and content of the ADM corresponding to the index. At step 412, the display 158 displays the SMS message and the content of the ADM in accordance with the style code (see Fig. 7). At step 414, the improved SMS client 152 detects an interaction with the content of the advertisement (e.g. a click by a user) and sends feedback to the network entity 108 via mobile network 104 and/or internet 102.

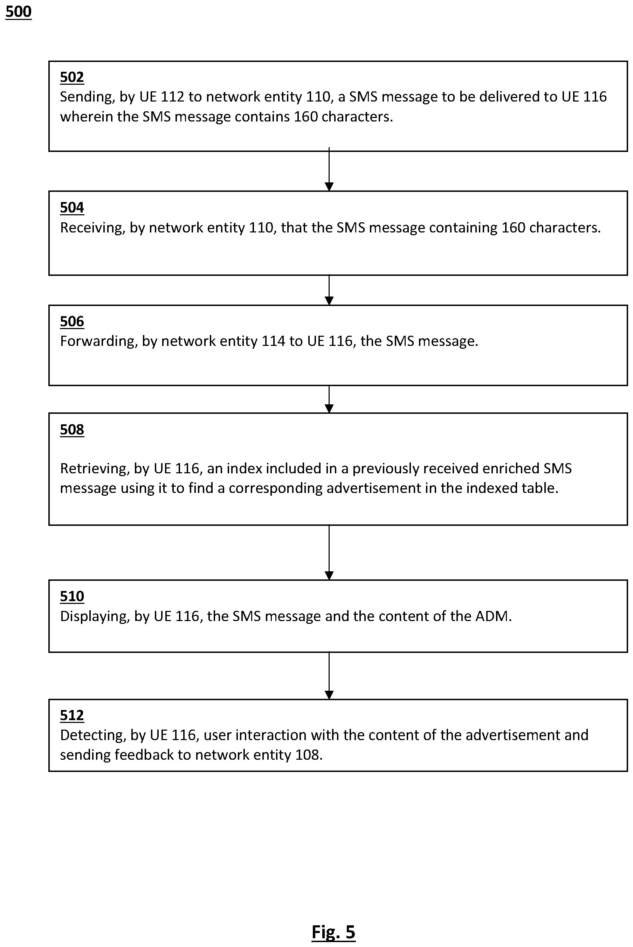

Fig. 5 shows a method 500 for displaying a SMS message sent by UE 112 and the content of an ADM at UE 116. At step 502, the standard SMS client 144 of UE 112 sends the SMS message SMSC 142 of network entity 110. As a result of generating the SMS message using the standard SMS client 144, the SMS message contains a maximum of one hundred and sixty characters. In this example, the SMS message contains one hundred and sixty characters. At step 504, the SMSC 142 of network entity 110 receives the SMS message from UE 112. At step 506, because the SMS message contains one hundred and sixty characters, the advertisement blender 140 cannot generate an enriched SMS message comprising the SMS message and an index. Instead, the SMSC 142 forwards the SMS message to the improved SMS client 152 of UE 116 via the network transmitter/receiver 156.

At step 508, UE 116 receives the SMS message. The improved SMS client 152 retrieves the index included in the previously received enriched SMS message (see Fig. 4). The index is used to locate an ADM stored in the indexed table 200 and retrieve at least the style code and content of the ADM corresponding to the index. At step 510, the display 158 displays the SMS message and the content of the ADM in accordance with the style code (see Fig. 7). At step 512, the improved SMS client 152 detects an interaction with the content of the advertisement and sends feedback to the network entity 108 via mobile network 104 and/or internet 102.

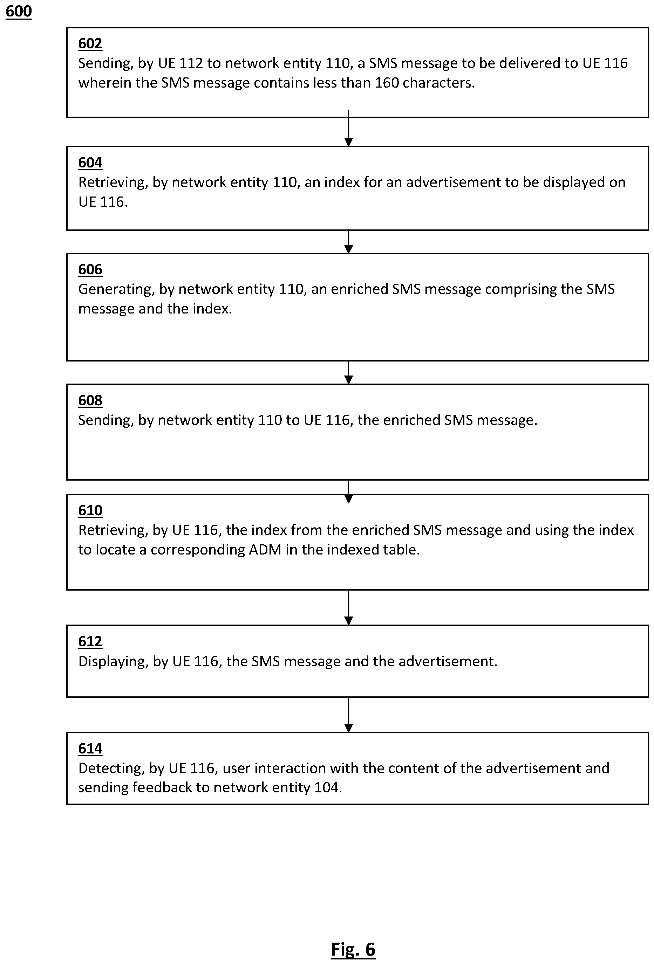

Fig. 6 shows another method 600 for displaying a SMS message sent by UE 112 and the content of an ADM at UE 116. In step 602, the standard SMS client 144 of UE 112 sends the SMS message SMSC 142 of network entity 110. As a result of generating the SMS message using the standard SMS client 144, the SMS message contains a maximum of one hundred and sixty characters. In this example, the SMS message contains less than one hundred and sixty characters. At step 604, the SMSC 142 of network entity 110 receives the SMS message from UE 112. The advertisement blender 140 retrieves an index of an ADM from the subset of ADMs stored in memory 136. At step 606, the advertisement blender 140 generates an enriched SMS message comprising the SMS message and the index. At step 608, the SMSC 142 sends the enriched SMS message to the improved SMS client 152 of UE 116 via the network transmitter/receiver 156.

At step 610, UE 116 receives the enriched SMS message. The improved SMS client 152 retrieves the index from the enriched SMS message. The index is used to locate an ADM stored in the indexed table 200 and retrieve at least the style code and content of the ADM corresponding to the index. At step 612, the display 158 displays the SMS message and the content of the ADM in accordance with the style code (see Fig. 7). At step 614, the improved SMS client 152 detects an interaction with the content of the advertisement and sends feedback to the network entity 108 via mobile network 104 and/or internet 102.

Fig. 7 shows the display 158 of UE 116displaying a SMS message and content of an ADM in accordance with a style code on according to one embodiment. The SMS message is displayed in a first window 702 and the content of the ADM is displayed in a second window. For example, the second window 704 is at the bottom of the first window 702 (or some position and shape defined by the style code). By so doing, the content of the ADM is displayed in an unobtrusive manner.

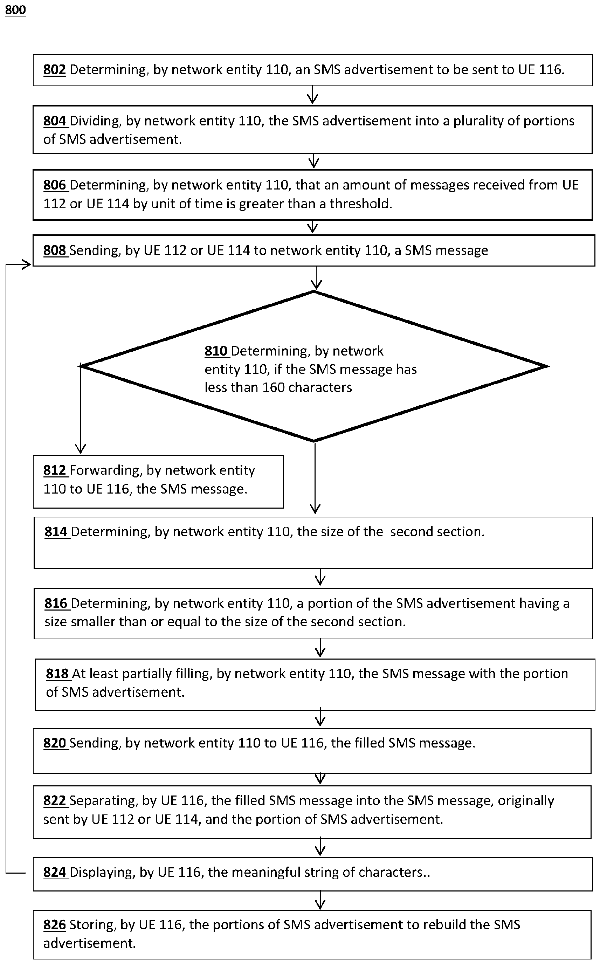

Fig. 8 shows a method 800 for sending a SMS advertisement from network entity 110 to UE 116. A SMS message has a maximum size of one hundred and sixty characters and comprises a first section filled with a meaningful string of characters (i.e. a text typed by a user), and a second section that is the difference between the maximum size of the SMS message and the size of the first section. The second section consists of unused characters and is therefore available space that can be filled at least partially with a portion of the SMS advertisement.

At step 802, the advertisement blender 134 determines a SMS advertisement to be sent to UE 116. At step 804, the advertisement blender 134 divides the SMS advertisement into a plurality of portions of the SMS advertisement. In an embodiment, the portions of the SMS advertisement have a predetermined size. In another embodiment, the portions of the SMS advertisement have a variable size. The SMS message advantageously comprises header information that indicates which section of the SMS message is the first section and which section of the SMS message is the second section. At step 806 the SMSC 142 determines that an amount of SMS messages received from UE 112 and UE 114, by unit of time, is greater than a threshold.

At step 808, UE 112 or UE 114 sends a SMS message to SMSC 142 to be delivered to UE 116. At step 810, the advertisement blender determines if the SMS message, to be delivered to UE 116, has less than one hundred and sixty characters.

If the SMS message does not have less than one hundred and sixty characters (e.g. the size of the second section is zero) then it is forwarded to the network transmitter/receiver 156 of UE 116, step 812.

By contrast, if the SMS message does have less than one hundred and sixty characters then the advertisement blender 140 determines the size of the second section in the SMS message, step 814. At step 816, the advertisement blender 140 determines a portion of the SMS advertisement having a size smaller or equal to the size of the second section in the SMS message. At step 818, the advertisement blender 140 fills the second section of the SMS message with the portion of the SMS advertisement. At step 80, the SMSC 142 sends the filled SMS message to the network transmitter/receiver 156 of UE 116.

At step 822, the improved SMS client 152 of UE 116 separates the filled SMS message into the meaningful string of characters, and the portion of the SMS advertisement. The portion of the SMS advertisement is then stored in memory 154. At step 824, the display 158 displays a notification indicating the reception of a SMS message and upon opening of this notification the display 158 displays the meaningful string of characters Step 808 through to step 824 are repeated so that the plurality of portions of the SMS advertisement can be stored in memory 154. At step 826, the improved SMS client 152 aggregates the plurality of portions of the SMS advertisement to rebuild the SMS advertisement originally determined to be sent to UE 116. The improved SMS client 152 retrieves the SMS advertisement and builds/updates/maintains the indexed table 200.

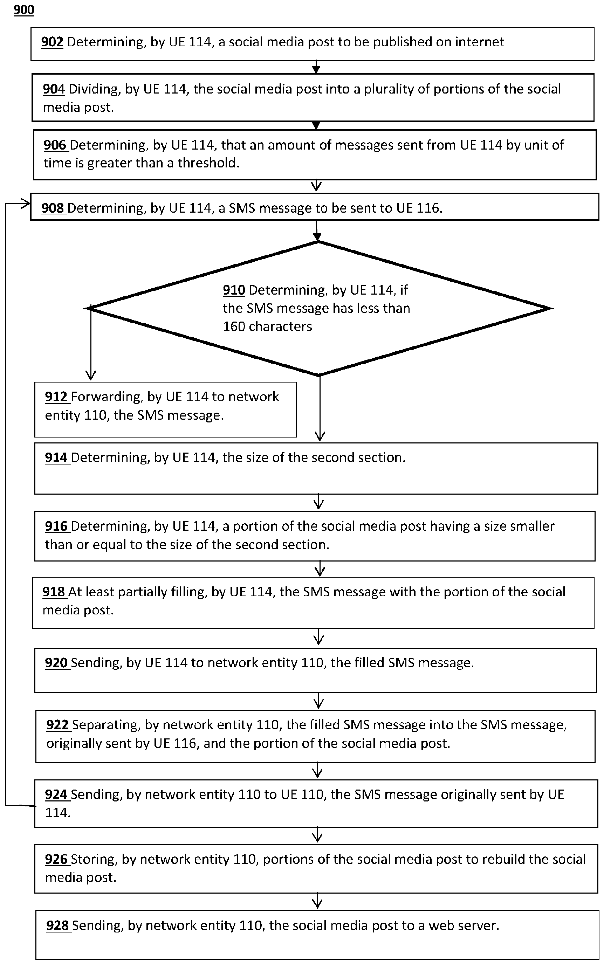

Fig. 9 shows a method 900 for sending a social media post by UE 114 to a web server. A SMS message has a maximum size of one hundred and sixty characters and comprises a first section filled with meaningful string of characters (i.e. a text typed by a user) and a second section that is the difference between the maximum size of the SMS message and the size of the first section. The second section consists of unused characters and is therefore available space that can be filled at least partially with a portion of the social media post.

At step 902, the improved SMS client 148 of UE 114 determines a social media post to be published on the internet. At step 904, the social media interface 160 divides up the social media post into a plurality of portions of social media post. In an embodiment, the portions of the social media post have a predetermined size. In another embodiment, the portions of the social media post have a variable size. The SMS message advantageously comprises header information that indicates which section of the SMS message the first section and which section of the SMS message is the second section. At step 906, the improved SMS client 148 determines that an amount of messages sent from UE 114, by unit of time, is greater than a threshold. At step 908, the improved SMS client 148 determines a SMS message to be sent to UE 116. At step 910, the improved SMS client 148 determines if the SMS message, to be delivered to UE 116, has less than one hundred and sixty characters.

If the SMS message does not have less than one hundred and sixty characters (e.g. the size of the second section is zero) then it is forwarded to the SMSC 142 of network entity 110, at step 912.

By contrast, if the SMS message does have less than one hundred and sixty characters then the improved SMS client 148 determines the size of the second section in the SMS message, at step 914. At step 916, the improved SMS client 148 determines a portion of the social media post having a size smaller than or equal to the size of the second section in the SMS message. At step 918, the improved SMS client 148 fills the second section with the portion of the social media post. At step 920, the network transmitter/receiver 150 sends the filled SMS message to the SMSC 142 of network entity 110.

At step 922, the social media interface 138 separates the filled SMS message into the meaningful string of characters and the portion of the social media post. At step 924, the SMSC 142 sends the SMS message (which has been deprived of the portion of the social media post) to the network transmitter/receiver 156 of UE 116. The display 158 of UE 116 displays a notification indicating the reception of a SMS message and upon opening this notification the display 158 displays the meaningful string of characters Step 908 through to step 924 are repeated so that the plurality of portions of the social media post can be stored in memory 136. At step 926, the social media interface 138 aggregates the portions of the social media post to rebuild the social media post originally determined to be published on the internet. At step 928, the social media interface 138, sends the rebuilt social media post to a web server.

## Claims

1. A method of communicating over a mobile radio network comprising:
sending, from the network entity (110) to a first mobile user equipment (116), a set of advertisement delivery messages, ADMs, containing a plurality of advertisements;
building or updating an indexed table (200), at the first mobile user equipment (116), using the plurality of advertisements;
receiving a Short Message Service, SMS, message at the network entity (110) from a second mobile user equipment (112, 114) wherein the size of the message received from the second user equipment (112, 114) is less than a maximum size for an SMS message;
generating, at the network entity (110), an enriched SMS message comprising the message, an index and header information that indicates which section is the message and which section is the index, wherein the index corresponds to content of a selected advertisement in the indexed table (200) built or updated by the first mobile user equipment (116) and the sum of the size of the index and the size of the message received from the second user equipment (112, 114) is less than or equal to the maximum size;
sending, by the network entity (110) to the first mobile user equipment (116), the enriched SMS message;
using the index, at the first mobile user equipment (116), in order to access the content of the selected advertisement from the indexed table (200); and
displaying, at the first mobile user equipment (116), the message and the content of the selected advertisement.

2. A method according to claim 1, wherein the sending, from the network entity (110) to the first user equipment (116), of ADMs occurs during off-peak hours; or
wherein the set of ADMs is sent, from the network entity (110) to the first user equipment (116), via SMS.

3. A method according to any one of claims 1 or 2, wherein each ADM includes a User Data Header, UDH, including an indicator indicating that the ADM is to be parsed and stored in the indexed table (200); and
wherein the ADM further comprises at least one of a Global Advertisement Key, a style code, a short code for action and future use.

4. A method according to any one of claims 1 to 3, wherein the index consists of one character;
wherein the method further comprises receiving, at the network entity (110), a feedback message from the first user equipment (116) when the first user equipment (116) interacts with the content of the selected advertisement; or
wherein the message and the selected advertisement are displayed in different windows (702, 704) of the first mobile user equipment.

5. A system comprising a first mobile user equipment (116), a second mobile user equipment (112, 114) and a mobile radio network entity (110) comprising:
means for sending, from the network entity (110) to the first user equipment (116), a set of advertisement delivery messages , ADMs, containing a plurality of advertisements;
means for building or updating an indexed table (200), at the first user equipment (116), using the plurality of advertisements;
means for receiving a Short Message Service, SMS, message at the network entity (110) from the second mobile user equipment (112, 114);
means for generating, at the network entity (110), an enriched SMS message comprising the message, an index and header information that indicates which section is the message and which section is the index, wherein the index corresponds to content of a selected advertisement in the indexed table (200) built or updated by the first user equipment (116) and wherein the size of the message received from the second user equipment (112, 114) is less than a maximum size for an SMS message;
means for sending, by the network entity (110) to the first user equipment (116), the enriched SMS message;
means for using the index, at the first mobile user equipment (116), in order to access the content of the selected advertisement from the indexed table (200); and
means for displaying, at the first mobile user equipment (116), the message and the content of the selected advertisement.

6. A method for sending an advertisement over a mobile radio network in which SMS messages are sent from first mobile user equipments (112, 114) to a second mobile user equipment (116), comprising:
(a) determining by the network entity (110) that an amount of Short Messaging Service, SMS, messages received from the first user equipments, by unit of time, is greater than a threshold (806);
(b) selecting a SMS message having a maximum size and having a first section filled with primary information (808);
(c) determining the size of a secondary section being the difference between the maximum size and the size of the first section (814);
(d) determining a portion of the advertisement having a size smaller or equal to the size of the secondary section (816);
(e) at least partially filling the secondary section with the portion of the advertisement (818) and providing header information that indicates which section is the first section and which section is the second section;
(f) sending the filled SMS message (820) to the second user (116); and
(g) repeating steps (b) to (f) for a plurality of portions of the advertisement until the advertisement has been sent to the second user equipment.

7. A method according to claim 6, further comprising dividing the advertisement into a plurality of portions for insertion into the secondary sections of a plurality of SMS messages (804, 904);
wherein each portion of the plurality of portions of the advertisement has a predetermined size, and portions of the advertisement are inserted into only SMS messages for which the size of the secondary section exceeds the predetermined size;
wherein each portion of the plurality of portions of the advertisement has a variable size and wherein the filled SMS message comprises header information indicating which section is filled with primary information and which section is at least partially filled with advertisement;
wherein each portion of the plurality of portions of the advertisement has a variable size and wherein the filled SMS message comprises header information indicating which section is filled with primary information and which section is at least partially filled with advertisement; or
wherein the advertisement comprises (i) an Advert Delivery Message, ADM, including an index and content and (ii) a User Data Header, UDH, including an indicator indicating that the ADM is to be parsed and stored in an indexed table in the second user equipment, wherein the ADM further comprises at least one of a Global Advertisement Key, a style code, a short code for action and future use.

8. An apparatus for sending an advertisement over a mobile radio network in which SMS messages are sent from first mobile user equipments (112, 114) to a second mobile user equipment (116), comprising:
means for determining by the network entity (110) that an amount of Short Messaging Service, SMS, messages received from the first user equipments, by unit of time, is greater than a threshold (806);
means for dividing the advertisement into a plurality of portions of secondary information for insertion into the secondary sections of SMS messages (804).
means for selecting SMS messages each having a maximum size and having a first section filled with primary information (808);
means for determining the size of each secondary section being the difference between the maximum size and the size of the first section (814);
means for at least partially filling the secondary sections with the portions of the advertisement (818), each portion having a size smaller or equal to the size of the respective secondary section (816), and for providing header information that indicates which section is the first section and which section is the second section; and
means for sending the filled SMS messages (820) and thereby sending the advertisement to the second user equipment.

9. A method for receiving information at a user equipment over a mobile radio network, comprising:
receiving one or more Short messaging Service, SMS, messages, each comprising a first section filled with primary information, a second section at least partially filled with a portion of an advertisement and header information that indicates which section is the first section and which section is the second section;
separating the SMS message(s) into the primary information and the portion(s) of advertisement (822);
delivering the primary information for use (824);
storing the portions of advertisement to rebuild the advertisement and an index therefor;
receiving a later SMS message (608) comprising a first section filled with second primary information, a second section at least partially filled with the index and header information that indicates which section is the first section and which section is the second section;
delivering the second primary information for use; and
retrieving the advertisement from storage using the index and displaying the advertisement.

10. A method according to claim 9, wherein the message and the selected advertisement are displayed in different windows (702, 704) of the user equipment.

11. A user equipment apparatus for receiving information over a mobile radio network, comprising:
means for receiving one or more Short Messaging Service, SMS, messages, each comprising a first section filled with primary information, a second section at least partially filled with a portion of an advertisement and header information that indicates which section is the first section and which section is the second section;
means for separating the SMS message(s) into the primary information and the portion(s) of advertisement (822); and
means for delivering the primary information for use;
means for storing the portion of advertisement for rebuilding the advertisement and an index therefor; and
means for receiving a later SMS message (608) comprising a first section filled with second primary information, a second section at least partially filled with the index and header information that indicates which section is the first section and which section is the second section, delivering the second primary information for use, retrieving the advertisement from storage and displaying the advertisement.

12. A method for sending a social media post over a mobile radio network from a user equipment (114) to a web server, comprising:
(a) determining by a SMS client (148) in the user equipment (114) that an amount of Short Messaging Service, SMS, messages sent from the user equipment, by unit of time, is greater than a threshold (906);
(b) selecting a SMS message having a maximum size and having a first section filled with primary information (908);
(c) determining the size of a secondary section being the difference between the maximum size and the size of the first section (914);
(d) determining a portion of social media post having a size smaller or equal to the size of the secondary section (916);
(e) providing header information that indicates which section of the SMS message is the first section and which section of the SMS message is the second section and at least partially filling the secondary section with the portion of social media post (918);
(f) sending the filled SMS message (920) to an SMS centre (142) for separation into primary information for a destination user equipment (116) and the portion of social media post for the web server; and
(g) repeating steps (b) to (f) for further portions of the social media post until the entire social media post has been sent to the web server.

13. A method according to claim 12, further comprising dividing the social media post into a plurality of portions of social media post for insertion into the secondary section of a SMS message (904); or
wherein the method is performed by a first user equipment (114) and wherein the filled SMS message is sent to a first network entity (110), such that the first network entity (110) can rebuild the social media post based on the portions of social media post and send the social media post to the web server.

14. An apparatus for sending a social media post over a mobile radio network from a user equipment (114) to a web server, comprising:
means for determining in the user equipment (114) that an amount of Short Messaging Service, SMS, messages sent from the user equipment, by unit of time, is greater than a threshold (906)
means for selecting a SMS message having a maximum size and having a first section filled with primary information (908);
means for determining the size of a secondary section being the difference between the maximum size and the size of the first section (914);
means for determining a portion of social media post having a size smaller or equal to the size of the secondary section (916);
means for providing header information that indicates which section of the SMS message is the first section and which section of the SMS message is the second section and for at least partially filling the secondary section with the portion of social media post (918); and
means for sending the filled SMS message (920) to an SMS centre (142) for separation into primary information for a destination user equipment (116) and the portion of social media post for the web server; and
means for sending for further portions of the social media post in secondary portions of further SMS messages until the entire social media post has been sent to the web server.

15. A non-transitory computer readable medium for equipping an apparatus comprising code, which when executed by a processor, causes the processor to perform a method according to any one of the claims 1 to 4, 6, 7, 9, 10, 12 and 13.

## Patentansprüche

1. Verfahren zum Kommunizieren über ein Mobilfunknetzwerk, das Folgendes beinhaltet:
Senden, von der Netzwerkentität (110) zu einem ersten mobilen Benutzergerät (116), eines Satzes von ADM (Advertisement Delivery Message), der mehrere Annoncen enthält;
Erstellen oder Aktualisieren einer indexierten Tabelle (200) am ersten mobilen Benutzergerät (116) anhand der mehreren Annoncen;
Empfangen einer SMS-(Short Message Service)-Nachricht an der Netzwerkentität (110) von einem zweiten mobilen Benutzergerät (112, 114), wobei die Größe der vom zweiten Benutzergerät (112, 114) empfangenen Nachricht geringer ist als eine maximale Größe für eine SMS-Nachricht;
Erzeugen, an der Netzwerkentität (110), einer erweiterten SMS-Nachricht, die die Nachricht, einen Index und Header-Informationen umfasst, die anzeigen, welcher Teil die Nachricht und welcher Teil der Index ist, wobei der Index Inhalt einer gewählten Annonce in der indexierten Tabelle (200) entspricht, erstellt oder aktualisiert vom ersten mobilen Benutzergerät (116), und die Summe der Größe des Indexes und der Größe der vom zweiten Benutzergerät (112, 114) empfangenen Nachricht gleich oder kleiner ist als die maximale Größe;
Senden der erweiterten SMS-Nachricht durch die Netzwerkentität (110) zum ersten mobilen Benutzergerät (116);
Benutzen des Indexes, am ersten mobilen Benutzergerät (116), zum Zugreifen auf den Inhalt der gewählten Annonce aus der indexierten Tabelle (200); und
Anzeigen, am ersten mobilen Benutzergerät (116), der Nachricht und des Inhalts der gewählten Annonce.

2. Verfahren nach Anspruch 1, wobei das Senden, von der Netzwerkentität (110) zum ersten Benutzergerät (116), von ADMs zu Nebenverkehrszeiten erfolgt; oder
wobei der Satz von ADMs von der Netzwerkentität (110) zum ersten Benutzergerät (116) per SMS gesendet wird.

3. Verfahren nach Anspruch 1 oder 2, wobei jede ADM einen UDH (User Data Header) mit einem Indikator beinhaltet, der anzeigt, dass die ADM zu parsen und in der indexierten Tabelle (200) zu speichern ist; und
wobei die ADM ferner wenigstens eines aus einem Global Advertisement Key, einem Style-Code, einem Kurzcode für Aktion und zukünftige Verwendung umfasst.

4. Verfahren nach einem der Ansprüche 1 bis 3, wobei der Index aus einem Zeichen besteht;
wobei das Verfahren ferner das Empfangen, an der Netzwerkentität (110), einer Feedback-Nachricht vom ersten Benutzergerät (116) beinhaltet, wenn das erste Benutzergerät (116) mit dem Inhalt der gewählten Annonce interagiert; oder
wobei die Nachricht und die gewählte Annonce in unterschiedlichen Fenstern (702, 704) des ersten mobilen Benutzergeräts angezeigt werden.

5. System, das ein erstes mobiles Benutzergerät (116), ein zweites mobiles Benutzergerät (112, 114) und eine Mobilfunknetzwerkentität (110) umfasst, umfassend:
Mittel zum Senden, von der Netzwerkentität (110) zum ersten Benutzergerät (116), eines Satzes von ADM (Advertisement Delivery Messages), der mehrere Annoncen umfasst;
Mittel zum Erstellen oder Aktualisieren einer indexierten Tabelle (200) am ersten Benutzergerät (116) anhand der mehreren Annoncen;
Mittel zum Empfangen einer SMS-(Short Message Service)-Nachricht an der Netzwerkentität (110) vom zweiten mobilen Benutzergerät (112, 114);
Mittel zum Erzeugen, an der Netzwerkentität (110), einer erweiterten SMS-Nachricht, die die Nachricht, einen Index und Header-Informationen umfasst, die anzeigen, welcher Teil die Nachricht und welcher Teil der Index ist, wobei der Index Inhalt einer gewählten Annonce in der indexierten Tabelle (200) entspricht, erstellt oder aktualisiert vom ersten Benutzergerät (116), und wobei die Größe der vom zweiten Benutzergerät (112, 114) empfangenen Nachricht geringer ist als eine maximale Größe für eine SMS-Nachricht;
Mittel zum Senden, durch die Netzwerkentität (110) zum ersten Benutzergerät (116), der erweiterten SMS-Nachricht;
Mittel zum Benutzen des Indexes, am ersten mobilen Benutzergerät (116), zum Zugreifen auf den Inhalt der gewählten Annonce von der indexierten Tabelle (200); und
Mittel zum Anzeigen, am ersten mobilen Benutzergerät (116), der Nachricht und des Inhalts der gewählten Annonce.

6. Verfahren zum Senden einer Annonce über ein Mobilfunknetzwerk, in dem SMS-Nachrichten von ersten mobilen Benutzergeräten (112, 114) zu einem zweiten mobilen Benutzergerät (116) gesendet werden, das Folgendes beinhaltet:
(a) Feststellen durch die Netzwerkentität (110), dass eine von den ersten Benutzergeräten empfangene Menge an SMS-(Short Messaging Service)-Nachrichten, nach Zeiteinheit, größer ist als eine Schwelle (806);
(b) Auswählen einer SMS-Nachricht mit einer maximalen Größe und mit einem ersten Teil, der mit primären Informationen (808) ausgefüllt ist;
(c) Feststellen der Größe eines sekundären Teils als die Differenz zwischen der maximalen Größe und der Größe des ersten Teils (814) ist;
(d) Feststellen eines Teils der Annonce als eine Größe, die gleich oder geringer ist als die Größe des sekundären Teils (816);
(e) wenigstens teilweises Ausfüllen des sekundären Teils mit dem Abschnitt der Annonce (818) und Bereitstellen von Header-Informationen, die anzeigen, welcher Teil der erste Teil und welcher Teil der zweite Teil ist;
(f) Senden der ausgefüllten SMS-Nachricht (820) zum zweiten Benutzer (116); und
(g) Wiederholen der Schritte (b) bis (f) für mehrere Abschnitte der Annonce, bis die Annonce zum zweiten Benutzergerät gesendet wurde.

7. Verfahren nach Anspruch 6, das ferner das Unterteilen der Annonce in mehrere Abschnitte zum Einfügen in die zweiten Teile von mehreren SMS-Nachrichten (804, 904) beinhaltet;
wobei jeder Abschnitt der mehreren Abschnitte der Annonce eine vorbestimmte Größe hat und Abschnitte der Annonce nur in SMS-Nachrichten eingefügt werden, bei denen die Größe des sekundären Teils die vorbestimmte Größe übersteigt;
wobei jeder Abschnitt der mehreren Abschnitte der Annonce eine variable Größe hat und wobei die ausgefüllte SMS-Nachricht Reader-Informationen umfasst, die anzeigen, welcher Teil mit primären Informationen und welcher Teil teilweise mit Annonce ausgefüllt ist;
wobei jeder Abschnitt der mehreren Abschnitte der Annonce eine variable Größe hat und wobei die ausgefüllte SMS-Nachricht Header-Informationen umfasst, die anzeigen, welcher Teil mit primären Informationen und welcher Teil wenigstens teilweise mit Annonce ausgefüllt ist; oder
wobei die Annonce Folgendes umfasst: (i) eine ADM (Advert Delivery Message), die einen Index und Inhalt beinhaltet, und (ii) einen UDH (User Data Header), einschließlich eines Indikators, der anzeigt, dass die ADM zu parsen und in einer indexierten Tabelle im zweiten Benutzergerät zu speichern ist, wobei die ADM ferner wenigstens eines aus einem Global Advertisement Key, einem Style-Code, einem Kurzcode für Aktion und zukünftige Verwendung beinhaltet.

8. Vorrichtung zum Senden einer Annonce über ein Mobilfunknetzwerk, in dem SMS-Nachrichten von ersten mobilen Benutzergeräten (112, 114) zu einem zweiten mobilen Benutzergerät (116) gesendet werden, die Folgendes umfasst:
Mittel zum Feststellen, durch die Netzwerkentität (110), dass eine von den ersten Benutzergeräten empfangene Menge an SMS-(Short Messaging Service)-Nachrichten, nach Zeiteinheit, größer ist als eine Schwelle (806);
Mittel zum Unterteilen der Annonce in mehrere Abschnitte von sekundären Informationen zum Einfügen in die sekundären Teile von SMS-Nachrichten (804);
Mittel zum Auswählen von SMS-Nachrichten jeweils mit einer maximalen Größe und mit einem ersten Teil, der mit primären Informationen (808) ausgefüllt ist;
Mittel zum Feststellen der Größe jedes sekundären Teils als die Differenz zwischen der maximalen Größe und der Größe des ersten Teils (814) ist;
Mittel zum wenigstens teilweisen Ausfüllen der sekundären Teile mit den Abschnitten der Annonce (818), wobei jeder Abschnitt eine Größe hat, die gleich oder geringer ist als die Größe des jeweiligen sekundären Teils (816), und zum Bereitstellen von Header-Informationen, die anzeigen, welcher Teil der erste Teil und welcher Teil der zweite Teil ist; und
Mittel zum Senden der ausgefüllten SMS-Nachrichten (820) und dadurch Senden der Annonce zum zweiten Benutzergerät.

9. Verfahren zum Empfangen von Informationen an einem Benutzergerät über ein Mobilfunknetzwerk, das Folgendes beinhaltet:
Empfangen von einer oder mehreren SMS-(Short Messaging Service)-Nachrichten, die jeweils einen mit primären Informationen ausgefüllten ersten Teil, einen wenigstens teilweise mit einem Abschnitt einer Annonce ausgefüllten zweiten Teil und Header-Informationen umfasst, die anzeigen, welcher Teil der erste Teil und welcher Teil der zweite Teil ist;
Trennen der SMS-Nachricht(en) in die primären Informationen und den/die Abschnitt(e) der Annonce (822);
Liefern der primären Informationen zur Verwendung (824);
Speichern der Annoncenabschnitte zum erneuten Erstellen der Annonce und eines Indexes dafür;
Empfangen einer späteren SMS-Nachricht (608), die einen mit zweiten primären Informationen ausgefüllten ersten Teil, einen wenigstens teilweise mit dem Index ausgefüllten zweiten Teil und Header-Informationen umfasst, die anzeigen, welcher Teil der erste Teil und welcher Teil der zweite Teil ist;
Liefern der zweiten primären Informationen zur Verwendung; und
Abrufen der Annonce aus dem Speicher anhand des Indexes und Anzeigen der Annonce.

10. Verfahren nach Anspruch 9, wobei die Nachricht und die gewählte Annonce in unterschiedlichen Fenstern (702, 704) des Benutzergeräts angezeigt werden.

11. Benutzergerätevorrichtung zum Empfangen von Informationen über ein Mobilfunknetzwerk, die Folgendes umfasst:
Mittel zum Empfangen von einer oder mehreren SMS-(Short Messaging Service)-Nachrichten, die jeweils einen mit primären Informationen ausgefüllten ersten Teil, einen wenigstens teilweise mit einem Abschnitt einer Annonce ausgefüllten zweiten Teil und Header-Informationen umfassen, die anzeigen, welcher Teil der erste Teil und welcher Teil der zweite Teil ist;
Mittel zum Unterteilen der SMS-Nachricht(en) in die primären Informationen und den/die Abschnitt(e) der Annonce (822); und
Mittel zum Liefern der primären Informationen zur Verwendung;
Mittel zum Speichern des Annoncenabschnitts zum erneuten Erstellen der Annonce und eines Indexes dafür; und
Mittel zum Empfangen einer späteren SMS-Nachricht (608), die einen mit zweiten primären Informationen ausgefüllten ersten Teil, einen wenigstens teilweise mit dem Index ausgefüllten zweiten Teil und Header-Informationen umfasst, die anzeigen, welcher Teil der erste Teil und welcher Teil der zweite Teil ist, Liefern der zweiten primären Informationen zur Verwendung, Abrufen der Annonce aus dem Speicher und Anzeigen der Annonce.

12. Verfahren zum Senden eines Social-Media-Post über ein Mobilfunknetzwerk von einem Benutzergerät (114) zu einem Web-Server, das Folgendes beinhaltet:
(a) Feststellen durch einen SMS-Client (148) im Benutzergerät (114), dass eine Menge an vom Benutzergerät gesendeten SMS-(Short Messaging Service)-Nachrichten, nach Zeiteinheit, größer ist als eine Schwelle (906);
(b) Auswählen einer SMS-Nachricht mit einer maximalen Größe und mit einem mit primären Informationen (908) ausgefüllten ersten Teil;
(c) Feststellen der Größe eines sekundären Teils als die Differenz zwischen der maximalen Größe und der Größe des ersten Teils (914) ist;
(d) Feststellen eines Abschnitts eines Social-Media-Post als eine Größe, die gleich oder geringer ist als die Größe des sekundären Teils (916);
(e) Bereitstellen von Header-Informationen, die anzeigen, welcher Teil der SMS-Nachricht der erste Teil und welcher Teil der SMS-Nachricht der zweite Teil ist, und wenigstens teilweises Ausfüllen des sekundären Teils mit dem Abschnitt des Social-Media-Post (918);
(f) Senden der ausgefüllten SMS-Nachricht (920) zu einer SMS-Zentrale (142) zum Trennen in primäre Informationen für ein Zielbenutzergerät (116) und den Abschnitt des Social-Media-Post für den Web-Server; und
(g) Wiederholen der Schritte (b) bis (f) für weitere Abschnitte des Social-Media-Post, bis der gesamte Social-Media-Post zum Web-Server gesendet wurde.

13. Verfahren nach Anspruch 12, das ferner das Unterteilen des Social-Media-Post in mehrere Abschnitte von Social-Media-Posts zum Einfügen in den sekundären Teil einer SMS-Nachricht (904) beinhaltet; oder
wobei das Verfahren vom ersten Benutzergerät (114) ausgeführt wird und wobei die ausgefüllt SMS-Nachricht zu einer ersten Netzwerkentität (110) gesendet wird, so dass die erste Netzwerkentität (110) den Social-Media-Post auf der Basis der Abschnitte des Social-Media-Post neu erstellen und den Social-Media-Post zum Web-Server senden kann.

14. Vorrichtung zum Senden eines Social-Media-Post über ein Mobilfunknetzwerk von einem Benutzergerät (114) zu einem Web-Server, die Folgendes umfasst:
Mittel zum Feststellen im Benutzergerät (114), dass eine Menge an vom Benutzergerät gesendeten SMS-(Short Messaging Service)-Nachrichten, nach Zeiteinheit, größer ist als eine Schwelle (906);
Mittel zum Auswählen einer SMS-Nachricht mit einer maximalen Größe und mit einem mit primären Informationen (908) ausgefüllten ersten Teil;
Mittel zum Feststellen der Größe eines sekundären Teils als die Differenz zwischen der maximalen Größe und der Größe des ersten Teils (914) ist;
Mittel zum Feststellen eines Abschnitts eines Social-Media-Post als eine Größe, die gleich oder geringer ist als die Größe des sekundären Teils (916);
Mittel zum Bereitstellen von Header-Informationen, die anzeigen, welcher Teil der SMS-Nachricht der erste Teil und welcher Teil der SMS-Nachricht der zweite Teil ist, und zum wenigstens teilweisen Ausfüllen des sekundären Teils mit dem Abschnitt des Social-Media-Post (918); und
Mittel zum Senden der ausgefüllten SMS-Nachricht (920) zu einer SMS-Zentrale (142) zum Trennen in primäre Informationen für ein Zielbenutzergerät (116) und den Abschnitt des Social-Media-Post für den Web-Server; und
Mittel zum Senden für weitere Abschnitte des Social-Media-Post in sekundären Abschnitten von weiteren SMS-Nachrichten, bis der gesamte Social-Media-Post zum Web-Server gesendet wurde.

15. Nichtflüchtiges computerlesbares Medium zum Ausstatten einer Vorrichtung, die Code umfasst, der bei Abarbeitung durch einen Prozessor bewirkt, dass der Prozessor ein Verfahren nach einem der Ansprüche 1 bis 4, 6, 7, 9, 10, 12 und 13 ausführt.

## Revendications

1. Un procédé de communication par l'intermédiaire d'un réseau radio mobile comprenant :
l'envoi, de l'entité de réseau (110) à un premier équipement d'utilisateur mobile (116), d'un ensemble de messages de remise de publicités, ADM, contenant une pluralité de publicités,
la construction ou l'actualisation d'une table indexée (200), au niveau du premier équipement d'utilisateur mobile (116), au moyen de la pluralité de publicités,
la réception d'un message de service d'envoi de messages courts, SMS, au niveau de l'entité de réseau (110) à partir d'un deuxième équipement d'utilisateur mobile (112, 114) où la taille du message reçu à partir du deuxième équipement d'utilisateur (112, 114) est inférieure à une taille maximale pour un message SMS,
la génération, au niveau de l'entité de réseau (110), d'un message SMS enrichi contenant le message, des informations d'index et d'en-tête qui indiquent quelle section est le message et quelle section est index, où l'index correspond à un contenu d'une publicité sélectionnée dans la table indexée (200) construite ou actualisée par le premier équipement d'utilisateur mobile (116), et la somme de la taille de l'index et de la taille du message reçu à partir du deuxième équipement d'utilisateur (112, 114) est inférieure ou égale à la taille maximale,
l'envoi, par l'entité de réseau (110) au premier équipement d'utilisateur mobile (116), du message SMS enrichi,
l'utilisation de index, au niveau du premier équipement d'utilisateur mobile (116), afin d'accéder au contenu de la publicité sélectionnée à partir de la table indexée (200), et
l'affichage, au niveau du premier équipement d'utilisateur mobile (116), du message et du contenu de la publicité sélectionnée.

2. Un procédé selon la Revendication 1, où l'envoi, de l'entité de réseau (110) au premier équipement d'utilisateur (116), d'ADM se déroule au cours d'heures creuses, ou
où l'ensemble d'ADM est envoyé, de l'entité de réseau (110) au premier équipement d'utilisateur (116), par l'intermédiaire de SMS.

3. Un procédé selon l'une quelconque des Revendications 1 ou 2, où chaque ADM comprend un en-tête de données d'utilisateur, UDH, contenant un indicateur indiquant que l'ADM doit être analysé et conservé en mémoire dans la table indexée (200), et
où l'ADM comprend en outre au moins un élément parmi une clé de publicité globale, un code de style, un code abrégé pour une action et une utilisation future.

4. Un procédé selon l'une quelconque des Revendications 1 à 3, où l'index se compose d'un caractère,
où le procédé comprend en outre la réception, au niveau de l'entité de réseau (110), d'un message d'informations en retour à partir du premier équipement d'utilisateur (116) lorsque le premier équipement d'utilisateur (116) interagit avec le contenu de la publicité sélectionnée, ou
où le message et la publicité sélectionnée sont affichés dans des fenêtres différentes (702, 704) du premier équipement d'utilisateur mobile.

5. Un système comprenant un premier équipement d'utilisateur mobile (116), un deuxième équipement d'utilisateur mobile (112, 114) et une entité de réseau radio mobile (110) comprenant :
un moyen d'envoi, de l'entité de réseau (110) au premier équipement d'utilisateur (116), d'un ensemble de messages de remise de publicités, ADM, contenant une pluralité de publicités,
un moyen de construction ou d'actualisation d'une table indexée (200), au niveau du premier équipement d'utilisateur (116), au moyen de la pluralité de publicités,
un moyen de réception d'un message de service d'envoi de messages courts, SMS, au niveau de l'entité de réseau (110) à partir du deuxième équipement d'utilisateur mobile (112, 114),
un moyen de génération, au niveau de l'entité de réseau (110), d'un message SMS enrichi contenant le message, des informations d'index et d'en-tête qui indiquent quelle section est le message et quelle section est index, où l'index correspond au contenu d'une publicité sélectionnée dans la table indexée (200) construite ou actualisée par le premier équipement d'utilisateur (116) et où la taille du message reçu à partir du deuxième équipement d'utilisateur (112, 114) est inférieure à une taille maximale pour un message SMS,
un moyen d'envoi, par l'entité de réseau (110) au premier équipement d'utilisateur (116), du message SMS enrichi,
un moyen d'utilisation de index, au niveau du premier équipement d'utilisateur mobile (116), afin d'accéder au contenu de la publicité sélectionnée à partir de la table indexée (200), et
un moyen d'affichage, au niveau du premier équipement d'utilisateur mobile (116), du message et du contenu de la publicité sélectionnée.

6. Un procédé d'envoi d'une publicité par l'intermédiaire d'un réseau radio mobile dans lequel des messages SMS sont envoyés à partir de premiers équipements d'utilisateur mobiles (112, 114) à un deuxième équipement d'utilisateur mobile (116), comprenant :
(a) la détermination par l'entité de réseau (110) qu'une quantité de messages de service d'envoi de messages courts, SMS, reçus à partir des premiers équipements d'utilisateur, par unité de temps, est supérieure à un seuil (806):
(b) la sélection d'un message SMS possédant une taille maximale et possédant une première section remplie avec des informations primaires (808),
(c) la détermination de la taille d'une section secondaire qui est la différence entre la taille maximale et la taille de la première section (814),
(d) la détermination d'une partie de la publicité possédant une taille inférieure ou égale à la taille de la section secondaire (816),
(e) le remplissage au moins partiellement de la section secondaire avec la partie de la publicité (818) et la fourniture d'informations d'en-tête qui indiquent quelle section est la première section et quelle section est la deuxième section,
(f) l'envoi du message SMS rempli (820) au deuxième utilisateur (116), et
(g) la répétition des opérations (b) à (f) pour une pluralité de parties de la publicité jusqu'à ce que la publicité soit envoyée au deuxième équipement d'utilisateur.

7. Un procédé selon la Revendication 6, comprenant en outre la division de la publicité en une pluralité de parties pour une insertion dans les sections secondaires d'une pluralité de messages SMS (804, 904),
où chaque partie de la pluralité de parties de la publicité possède une taille prédéterminée, et des parties de la publicité sont insérées dans uniquement des messages SMS pour lesquels la taille de la section secondaire dépasse la taille prédéterminée,
où chaque partie de la pluralité de parties de la publicité possède une taille variable et où le message SMS rempli contient des informations d'en-tête indiquant quelle section est remplie avec des informations primaires et quelle section est au moins partiellement remplie avec une publicité,
où chaque partie de la pluralité de parties de la publicité possède une taille variable et où le message SMS rempli contient des informations d'en-tête indiquant quelle section est remplie avec des informations primaires et quelle section est au moins partiellement remplie avec une publicité, ou
où la publicité comprend (i) un message de remise de publicité, ADM, contenant un indice et un contenu et (ii) un en-tête de données d'utilisateur, UDH, contenant un indicateur indiquant que l'ADM doit être analysé et conservé en mémoire dans une table indexée dans le deuxième équipement d'utilisateur, où l'ADM contient en outre au moins un élément parmi une clé de publicité globale, un code de style, un code abrégé pour une action et une utilisation future.

8. Un appareil destiné à l'envoi d'une publicité par l'intermédiaire d'un réseau radio mobile dans lequel des messages SMS sont envoyés de premiers équipements d'utilisateur mobiles (112, 114) vers un deuxième équipement d'utilisateur mobile (116), comprenant :
un moyen de détermination par l'entité de réseau (110) qu'une quantité de messages de service d'envoi de messages courts, SMS, reçus des premiers équipements d'utilisateur, par unité de temps, est supérieure à un seuil (806),
un moyen de division de la publicité en une pluralité de parties d'informations secondaires pour une insertion dans les sections secondaires de messages SMS (804),
un moyen de sélection de messages SMS, chacun d'eux possédant une taille maximale et possédant une première section remplie avec des informations primaires (808),
un moyen de détermination de la taille de chaque section secondaire qui est la différence entre la taille maximale et la taille de la première section (814),
un moyen de remplissage au moins partiellement des sections secondaires avec les parties de la publicité (818), chaque partie possédant une taille inférieure ou égale à la taille de la section secondaire respective (816), et de fourniture d'informations d'en-tête qui indiquent quelle section est la première section et quelle section est la deuxième section, et
un moyen d'envoi des messages SMS remplis (820), et ainsi l'envoi de la publicité au deuxième équipement d'utilisateur.

9. Un procédé de réception d'informations au niveau d'un équipement d'utilisateur par l'intermédiaire d'un réseau radio mobile, comprenant :
la réception d'un ou de plusieurs messages de service d'envoi de messages courts, SMS, chacun d'eux comprenant une première section remplie avec des informations primaires, une deuxième section au moins partiellement remplie avec une partie d'une publicité et des informations d'en-tête qui indiquent quelle section est la première section et quelle section est la deuxième section,
la séparation du/des message(s) SMS en les informations primaires et en la/les partie(s) de publicité (822),
la remise des informations primaires pour une utilisation (824),
la conservation en mémoire des parties de publicité de façon à reconstruire la publicité et un index à cet effet,
la réception d'un message SMS ultérieur (608) comprenant une première section remplie avec des deuxièmes informations primaires, une deuxième section au moins partiellement remplie avec l'index et des informations d'en-tête qui indiquent quelle section est la première section et quelle section est la deuxième section,
la remise des deuxièmes informations primaires pour une utilisation, et
la récupération de la publicité à partir d'un espace mémoire au moyen de l'index et l'affichage de la publicité.

10. Un procédé selon la Revendication 9, où le message et la publicité sélectionnée sont affichés dans des fenêtres différentes (702, 704) de l'équipement d'utilisateur.

11. Un appareil d'équipement d'utilisateur destiné à la réception d'informations par l'intermédiaire d'un réseau radio mobile, comprenant :
un moyen de réception d'un ou de plusieurs messages de service d'envoi de messages courts, SMS, chacun d'eux comprenant une première section remplie avec des informations primaires, une deuxième section au moins partiellement remplie avec une partie d'une publicité et des informations d'en-tête qui indiquent quelle section est la première section et quelle section est la deuxième section,
un moyen de séparation du/des message(s) SMS en les informations primaires et la/les partie(s) de publicité (822), et
un moyen de remise des informations primaires pour une utilisation,
un moyen de conservation en mémoire de la partie de publicité pour la reconstruction de la publicité et un indice à cet effet, et
un moyen de réception d'un message SMS ultérieur (608) comprenant une première section remplie avec des deuxièmes informations primaires, une deuxième section au moins partiellement remplie avec l'index et des informations d'en-tête qui indiquent quelle section est la première section et quelle section est la deuxième section, la remise des deuxièmes informations primaires pour une utilisation, la récupération de la publicité à partir d'un espace mémoire et l'affichage de la publicité.

12. Un procédé d'envoi d'un article de réseau social par l'intermédiaire d'un réseau radio mobile d'un équipement d'utilisateur (114) à un serveur web, comprenant :
(a) la détermination par un client SMS (148) dans l'équipement d'utilisateur (114) qu'une quantité de messages de service d'envoi de messages courts, SMS, envoyées à partir de l'équipement d'utilisateur, par unité de temps, est supérieure à un seuil (906),
(b) la sélection d'un message SMS possédant une taille maximale et possédant une première section remplie avec des informations primaires (908),
(c) la détermination de la taille d'une section secondaire qui est la différence entre la taille maximale et la taille de la première section (914),
(d) la détermination d'une partie d'article de réseau social possédant une taille inférieure ou égale à la taille de la section secondaire (916),
(e) la fourniture d'informations d'en-tête qui indiquent quelle section du message SMS est la première section et quelle section du message SMS est la deuxième section, et le remplissage au moins partiellement de la section secondaire avec la partie d'article de réseau social (918),
(f) l'envoi du message SMS rempli (920) à un centre SMS (142) pour une séparation en des informations primaires pour un équipement d'utilisateur de destination (116) et la partie d'article de réseau social destinée au serveur web, et
(g) la répétition des opérations (b) à (f) pour d'autres parties de l'article de réseau social jusqu'à ce que la totalité de l'article de réseau social soit envoyée au serveur web.

13. Un procédé selon la Revendication 12, comprenant en outre la division de l'article de réseau social en une pluralité de parties d'article de réseau social pour une insertion dans la section secondaire d'un message SMS (904), ou
où le procédé est exécuté par un premier équipement d'utilisateur (114) et où le message SMS rempli est envoyé à une première entité de réseau (110), de sorte que la première entité de réseau (110) puisse reconstruire l'article de réseau social en fonction des parties d'article de réseau social et envoyer l'article de réseau social au serveur web.

14. Un appareil d'envoi d'un article de réseau social par l'intermédiaire d'un réseau radio mobile d'un équipement d'utilisateur (114) à un serveur web, comprenant :
un moyen de détermination dans l'équipement d'utilisateur (114) qu'une quantité de messages de service d'envoi de messages courts, SMS, envoyés à partir de l'équipement d'utilisateur, par unité de temps, est supérieure à un seuil (906),
un moyen de sélection d'un message SMS possédant une taille maximale et possédant une première section remplie avec des informations primaires (908),
un moyen de détermination de la taille d'une section secondaire qui est la différence entre la taille maximale et la taille de la première section (914),
un moyen de détermination d'une partie d'article de réseau social possédant une taille inférieure ou égale à la taille de la section secondaire (916),
un moyen de fourniture d'informations d'en-tête qui indiquent quelle section du message SMS est la première section et quelle section du message SMS est la deuxième section et de remplissage au moins partiellement de la section secondaire avec la partie d'article de réseau social (918), et
un moyen d'envoi du message SMS rempli (920) à un centre SMS (142) pour une séparation en des informations primaires pour un équipement d'utilisateur de destination (116) et la partie d'article de réseau social destinée au serveur web, et
un moyen d'envoi d'autres parties de l'article de réseau social dans des parties secondaires d'autres messages SMS jusqu'à ce que la totalité de l'article de réseau social soit envoyée au serveur web.

15. Un support lisible par ordinateur non transitoire destiné à équiper un appareil contenant du code, qui, lorsqu'il est exécuté par un processeur, amène le processeur à exécuter un procédé selon l'une quelconque des Revendications 1 à 4, 6, 7, 9, 10, 12 et 13.
